# EUROPÄISCHE PATENTANMELDUNG

(11) **EP 3 815 536 A1**
(43) Veröffentlichungstag der Anmeldung: **05.05.2021**
(21) Anmeldenummer: 19206879.9
(22) Anmeldetag: 04.11.2019
(51) Int. Cl.: A21D 2/36, A21D 13/06, A21D 13/41, A21D 13/42, A21D 13/44, A23L 19/00

(54) **KOHLENHYDRATREDUZIERTES TEIGPRODUKT AUF TRESTERBASIS**

(71) Anmelder: Hochland SE, 88178 Heimenkirch (DE)
(72) Erfinder: ROTHER, Matthias, 88239 Wangen (DE); POLLAK, Lydia, 88131 Lindau (DE)
(74) Vertreter: Patent- und Rechtsanwälte Behrmann Wagner PartG mbB

(57) **Zusammenfassung**

Die vorliegende Erfindung betrifft ein Teigprodukt auf Tresterbasis aufweisend einen Obst- und/oder Gemüseanteil auf Basis eines oder mehrerer Trester und von wenigstens 20 %, bevorzugt von wenigstens 30 % und mehr bevorzugt von wenigstens 40 % in der Trockenmasse des Teigprodukts, wobei das Teigprodukt einen Kohlenhydratanteil (abs.) von weniger als 20 %, bevorzugt weniger als 10 % und mehr bevorzugt weniger als 5 % aufweist.

## Beschreibung

Die Erfindung betrifft ein kohlenhydratreduziertes und bevorzugt veganes Teigprodukt auf Tresterbasis sowie ein Verfahren zum Herstellen des erfindungsgemäßen Teigprodukts.

Teigprodukte wie beispielsweise Pizzaböden, Tortillas, Nudeln oder Brote auf Weizenmehlbasis oder auf Basis anderer, insbesondere glutenhaltiger Getreidesorten sind hinreichend bekannt und werden seit Jahren auch als industrielle Lebensmittelprodukte vermarktet. Diese weisen in der Regel einen relativ hohen Kohlenhydratanteil auf. Kohlenhydratreduzierte Teigprodukte sind ebenfalls bereits auf dem Markt erhältlich. Diese sind jedoch durch den Einsatz von Gluten, Hühnereiweiß, Milcheiweiß, Hülsenfrüchtenmehlen oder Pflanzenproteinisolaten relativ eiweißreich. Ebenfalls bekannt sind glutenfreie Ersatzprodukte, in welchen das Mehl üblicherweise durch Stärke ersetzt wird, womit weniger Ballaststoffe und ein höherer glykämischer Index einhergehen.

Bekannt ist auch, dass eine gesundheitsbewusstere Ernährung einen immer höheren Stellenwert bei den Verbrauchern einnimmt. Um dies zu adressieren, existieren bereits Teigprodukte auf dem Markt, welche beispielsweise mit Obst- oder Gemüsesäften, -mehlen oder -pürees angereichert sind. Nachteilig an den bekannten Produkten ist allerdings, dass es entweder in erster Linie zu einer Anreicherung von Zucker aufgrund der Zugabe von Säften oder Obst- und Gemüsemehlen kommt und/oder dass in erster Linie Wasser in der Form von Saft oder Püree zugesetzt wird. Der eigentliche Anteil an z.B. Weizenmehl verändert sich dadurch nur unwesentlich oder sogar zu Ungunsten von Zucker. Auch ist eine Reihe von Gemüsefasern, wie zum Beispiel auf Basis von Karotten, Kartoffeln oder Erbsen, in raffinierter getrockneter Form auf dem Markt erhältlich. Diese Produkte haben allerdings mit der ursprünglichen Gemüserohware sowohl farblich als auch geschmacklich nichts mehr gemeinsam und eignen sich somit lediglich als neutrales Additiv und nicht als geschmacksbeeinflussendes oder -bestimmendes Produkt in einem Lebensmittel.

WO 2009/037086 A1 offenbart ein frisches Nudelprodukt bestehend aus einem Teig aus Mehl, insbesondere Hartweizengrießmehl oder Reismehl, Eier und Wasser, wobei der Teig bevorzugt zwischen 20-36 Gew.-% eines oder mehrerer frischer Gemüsesorten aufweist. Das resultierende Nudelprodukt weist einen relativ hohen Kohlenhydratanteil auf. Zudem wird durch die dem Teig zugemischten frischen Gemüsesorten in erster Linie Wasser dem Produkt zugesetzt.

DE 37 00 953 C2 offenbart ein Weichgebäck, hergestellt aus einem Teig, der aus Brotgetreiden, wie Weizen, Roggen oder Gerste, Treibmittel, Flüssigkeit und Salz besteht, wobei der Teig vorzugsweise 45 Gew.-%, Brotgetreidekomponente in gemahlener, geschroteter und/oder gequetschter Form und vorzugsweise rund 45 Gew.-% Obst und Gemüse in frischer, eingekochter oder konservierter Form aufweist. Hierdurch soll in erster Linie ein niedrigerer Brennwert des Gebäcks erzielt werden, der resultierende Kohlenhydratanteil ist jedoch relativ hoch.

EP 2 112 885 B1 offenbart ein nicht-veganes Lebensmittelprodukt, welches aus einer Mischung von proteinhaltigen Bestandteilen wie beispielsweise fein zerkleinertem Fleisch und entsaftetem Gemüse hergestellt wird. Das entsaftete Gemüse soll einen möglichst hohen Feuchtigkeitsgehalt aufweisen, um ein Einkneten in einen Teig aufweisend die proteinhaltigen Bestandteile des Produkts zu ermöglichen. Der bereitgestellte Gemüseanteil in diesem Lebensmittelprodukt ist jedoch relativ gering und soll insbesondere als Additiv zur Texturoptimierung bei Fleischprodukten mittels des hohen Feuchtigkeitsgehalts dienen.

Ausgehend von dem bekannten Stand der Technik liegt der Erfindung die Aufgabe zugrunde, ein verbessertes Teigprodukt bereitzustellen, welches sich für eine gesundheitsbewusstere Ernährung eignet und sich gleichzeitig durch einen geringen Kohlenhydratanteil auszeichnet. Ferner besteht die Aufgabe darin ein bevorzugt veganes und/oder glutenfreies sowie geschmacklich und farblich ansprechendes Lebensmittelprodukt bereitzustellen.

Die zugrundeliegende Aufgabe wird durch das erfindungsgemäße Teigprodukt und das zugehörige Herstellungsverfahren mit den Merkmalen der unabhängigen Ansprüche gelöst. Vorteilhafte Weiterbildungen der Erfindung sind in den Unteransprüchen angegeben.

In einem ersten Aspekt betrifft die vorliegende Erfindung ein Teigprodukt auf Tresterbasis, aufweisend einen Obst- und/oder Gemüseanteil auf Basis eines oder mehrerer Trester und von wenigstens 20 %, bevorzugt wenigstens 30 %, weiterhin bevorzugt wenigstens 40 %, und noch mehr bevorzugt wenigstens 50 % in der Trockenmasse des Teigprodukts, wobei das Teigprodukt einen Kohlenhydratanteil (abs.) von weniger als 20 %, bevorzugt weniger als 10 %, weiterhin bevorzugt weniger als 7%, und noch mehr bevorzugt weniger als 5 % aufweist. Das Teigprodukt ist vorzugsweise durch das erfindungsgemäße Verfahren hergestellt.

Der Erfindung liegt zunächst die Erkenntnis zugrunde, dass ein nach einem Auspressen von Obst oder Gemüse zur Gewinnung von Saft, Extrakten und/oder Konzentrat übrigbleibender und an sich bekannter Trester insbesondere bei entsprechender Verfahrensführung für die Weiterverarbeitung in Lebensmittel für den menschlichen Verzehr geeignet ist und somit nicht auf den Einsatz in der Futtermittelindustrie beschränkt ist. Des Weiteren hat sich herausgestellt, dass eine Anreicherung der Trockenmasse in einem vorzugsweise industriell hergestellten bzw. bereitgestellten Obst- und/oder Gemüsetrester derart erfolgt, dass dieser in einem Teigprodukt und vorzugsweise ohne weitere Raffination eingesetzt werden kann und damit relativ hohe Obst- und/oder Gemüseanteile in der Trockenmasse realisierbar sind. Insbesondere wurde herausgefunden, dass sich ein auf Trester basierender Obst- und/oder Gemüseanteil als ein wesentlicher Bestandteil neben Wasser, bevorzugt der wesentlichste Bestandteil, insbesondere als substantieller Mehlersatz, zur Teigerzeugung in Teigprodukten eignet. Trotz des hohen Obst- und/oder Gemüseanteils kann gleichzeitig ein relativ kohlenhydratarmes Teigprodukt bereitgestellt werden, da im Trester eine substantielle Abreicherung von Kohlenhydraten in der Trockenmasse erfolgt. Hierdurch können insbesondere auch Obst- und Gemüsesorten als ein wesentlicher Bestandteil und insbesondere als substantieller Mehlersatz in Teigprodukten verwendet werden, welche in ihrer reinen Form viel zu süß für eine Anwendung in weitestgehend neutralen Teigprodukten wie beispielsweise Tortillas, Pizzaböden, Toastbrot, Brötchen, Nudeln etc. wären.

Die Erfindung stellt somit ein verbessertes Teigprodukt als vorzugsweise verzehrfertiges und industriell hergestelltes Lebensmittel bereit, welches sich durch einen relativ hohen Obst- und/oder Gemüseanteil auszeichnet und gleichzeitig einen sehr geringen Kohlenhydratanteil aufweist. Zudem wird ein insbesondere gegenüber der Verwendung von bekannten getrockneten Obst- und/oder Gemüsefasern verbessertes Teigprodukt mit optimierten organoleptischen Eigenschaften bereitgestellt. Insbesondere wird ein farblich und geschmacklich ansprechendes und für eine gesundheitsbewusste Ernährung geeignetes Lebensmittel bereitgestellt.

Im Rahmen der Erfindung wird unter dem Begriff "auf Basis eines oder mehrerer Trester" verstanden, dass der wesentlichste Bestandteil des Obst- und/oder Gemüseanteils in der Trockenmasse ein oder mehrere Obst- und/oder Gemüsetrester ist bzw. sind. In einer bevorzugten Ausführungsform liegt der Trester-Anteil in der Trockenmasse des Obst- und/oder Gemüseanteils bei 50% oder höher, mehr bevorzugt bei mehr als 70%, weiterhin bevorzugt bei mehr als 80% und noch mehr bevorzugt bei mehr als 95%. In einer besonders bevorzugten Ausführungsform liegt der Trester-Anteil in der Trockenmasse des Obst- und/oder Gemüseanteils bei mehr als 97%.

Unter "Trester" wird vorliegend ein Produkt verstanden, welches nach dem Auspressen von Obst oder Gemüse zur Gewinnung von Saft, Extrakten und/oder Konzentrat übrigbleibt.

Unter "Teig" wird ein ausformbares Zwischenprodukt verstanden. Unter "Teigprodukt" wird ein ausgeformter und gebackener oder anderweitig thermisch behandelter Teig verstanden. Unter "getrocknetem Teigprodukt" wird ein Teigprodukt verstanden, welches getrocknet bzw. weiter getrocknet wurde.

Unter "Gemüse" wird vorliegend Gemüse gemäß der Lebensmitteldefinition verstanden, welches im Unterschied zu Obst (Früchte mehrjähriger Pflanzen) für gewöhnlich von einjährig bzw. nur einmal tragenden Pflanzen stammt. Der hierin verwendete Begriff "Gemüse" kann somit auch Produkte umfassen, die nicht als Gemüse im botanischen Sinne einzustufen sind, wie beispielsweise Aubergine, Kürbis, Olive, Paprika, Tomate, Zucchini und Gurken. Insbesondere werden hierunter die Früchte von ein oder zweijährigen Pflanzen wie Zucchini, Paprika, Kürbisse, Gurken und Hülsenfrüchte verstanden. Auch sollen darunter essbare Pflanzteile ein-, zwei- oder mehrjähriger Pflanzen verstanden werden wie Wurzeln (Pastinake, Rote Bete, Karotte, Zwiebel), Stengel (Rotkohl, Weißkohl, Kohlrabi, Brokkoli, Blumenkohl), Blätter (Rotkohl, Weißkohl, Grünkohl, Spinat), Sprossen (Spargel) und Blüten (Brokkoli, Artischocke).

Unter "Obst" wird vorliegend Obst gemäß der Lebensmitteldefinition verstanden. Es handelt sich dabei im Unterschied zu Gemüse um die Früchte mehrjähriger Pflanzen, die im rohen Zustand einen meist süßlichen oder säuerlichen Geschmack aufweisen.

Zur Klarstellung sollen vorliegend von den Begriffen "Obst" und "Gemüse" kein Getreide und keine Samen (z.B. Leinsamen, Sonnenblumensamen) umfasst sein. Außerdem sollen diese Begriffe keine Nüsse (z.B. Haselnuss) und Kerne (z.B. Mandel) umfassen, es sei denn, diese werden als Teil eines Gemüses oder Obstes üblicherweise mitverzehrt (z.B. Erdbeere, Brombeere).

Der genannte "Obst- und/oder Gemüseanteil in der Trockenmasse" bezieht sich im Rahmen der vorliegenden Erfindung auf das Teigprodukt. Der "Kohlenhydratanteil (absolut)" bezieht sich im Rahmen der vorliegenden Erfindung auf das Teigprodukt. Der "Kohlenhydratanteil in der Trockenmasse" bezieht sich im Rahmen der vorliegenden Erfindung auf die Obst-/Gemüserohwaren. Die Prozentangaben beziehen sich, falls nicht anders angegeben, auf Masse- bzw. Gewichtsprozent im Teigprodukt.

Bei Kohlenhydraten handelt es sich im Rahmen der vorliegenden Erfindung immer um verwertbare Kohlenhydrate in Abgrenzung zu Ballaststoffen, den nicht verwertbaren Kohlenhydraten.

Der oder die Trester, auf Basis welcher der Obst- und/oder Gemüseanteil in der Trockenmasse des Teigprodukts bereitgestellt wird, stammt bzw. stammen vorzugsweise aus Obst- und/oder Gemüserohwaren, welche im frischen Zustand einen Kohlenhydratanteil in der Trockenmasse von mehr als 40% aufweisen. Aufgrund der bei der Herstellung des Tresters erfolgenden Abreicherung von Kohlenhydraten kann der Kohlenhydratanteil in der Trockenmasse der eingesetzten Obst- und/oder Gemüserohware ausgehend von einem Wert von mehr als 40% auf vorzugsweise weniger als 40%, mehr bevorzugt weniger als 35%, weiterhin bevorzugt weniger als 30%, noch weiter bevorzugt auf weniger als 25% gesenkt werden.

Die vorliegende Erfindung ermöglicht insbesondere den Einsatz von Obst- oder Gemüsesorten mit einem Kohlenhydratanteil in der Trockenmasse von über 40% zu einem substantiellen Anteil bei der Teigerzeugung, insbesondere als substantieller Mehlersatz bei der Teigerzeugung. So kann bei der vorzugsweise industriellen Tresterherstellung der Kohlenhydratanteil in der Trockenmasse der Obst- oder Gemüserohware beispielsweise von Äpfeln von über 75 % auf kleiner 40 % gesenkt werden. Bei Karotten kann der Kohlenhydratanteil in der Trockenmasse von circa 44 % auf kleiner als 30 % und bei Roter Bete von circa 61 % auf kleiner als 30 % gesenkt werden.

In einer bevorzugten Ausführungsform weist das für den Trester verwendete Obst- und/oder Gemüse eine (frische) Trockenmasse von 4 bis 25%, mehr bevorzugt von 4 bis 20%, weiter bevorzugt von 4 bis 16% auf.

In einer bevorzugten Ausführungsform ist das für den Trester verwendete Gemüse ausgewählt aus: Karotte, Pastinake, Rote Bete, Rotkohl, Weißkohl, Gurken, Tomate, Kürbis, Zucchini, Paprika, Zichorien, insbesondere Chicoree, Zuckerrübe, Gartenbohne, Erbse, Kohlrabi und/oder Zwiebeln.

In einer bevorzugten Ausführungsform ist das für den Trester verwendete Obst ausgewählt aus: Apfel, Birne, Aprikose, Kirsche sauer, Kirsche süß, Pfirsich, Pflaume, Brombeere, Erdbeere, Heidelbeere, Himbeere, Johannisbeere, Kiwi, und/oder Weintraube.

Der Trester weist vorzugsweise keine insbesondere ungenießbaren Schalenbestandteile auf, wie beispielsweise bei Mangos aufgrund möglicher Allergene oder bei Zitrusfrüchten aufgrund von Bitterstoffen.

Der Trester und/oder Teig ist vorzugsweise frei von Stielen, Verholzungen, (Obst-)Steinen und/oder (Obst-)Kernen oder deren Bruchteilen. Insbesondere weist der Trester keine Stein- und/oder Kernanteile mit einer Größe von mehr als 6 mm, weiter bevorzugt von mehr als 2 mm, noch weiter bevorzugt von mehr als 1 mm, und am bevorzugtesten von mehr als 800 µm (jeweils bestimmt mittels Lochsieb) auf. In einer besonders bevorzugten Ausführungsform ist der Trester frei von Obststeinen und/oder Kernen.

In der folgenden Tabelle 1 (Quelle: Souci, Fachmann, Kraut 2004) sind beispielhaft die jeweiligen Werte für die Trockenmasse und die Kohlenhydrate in der Trockenmasse für einige der oben genannten besonders bevorzugten Gemüsesorten genannt. Diese sind basierend auf den Inhaltsstoffen berechnet. Bei frischer Rohware können höhere Kohlenhydratgehalte vorliegen.

**Tabelle 1 - TM und KH in TM von beispielhaftem Gemüse**

| | **Trockenmasse (TM)** | **Kohlenhydrate in TM** |
|---|---|---|
| Karotte | 10,8% | 44,4% |
| Pastinake | 17,6% | 68,8% |
| Rote Beete | 13,7% | 61,3% |
| Rotkohl | 8,4% | 41,7% |
| Weißkohl | 9,7% | 43,3% |
| Gurke | 4,0% | 45,0% |
| Kürbis | 9,0% | 51,1% |
| Tomate | 5,8% | 44,8% |
| Chicoree | 6,0% | 40,0% |
| Gartenbohne | 10,5% | 48,6% |
| Kürbis | 9,0% | 51,1% |
| Kohlrabi | 8,4% | 44,0% |

Analog zu Tabelle 1 sind in untenstehender Tabelle 2 (Quelle: Souci, Fachmann, Kraut 2004) beispielhaft die jeweiligen Werte für die Trockenmasse und die Kohlenhydrate in der Trockenmasse für einige der oben genannten besonders bevorzugten Obstsorten genannt.

**Tabelle 2 - TM und KH in TM von beispielhaftem Obst**

| | **Trockenmasse (TM)** | **Kohlenhydrate in TM** |
|---|---|---|
| Apfel (ohne Kerne) | 15,1% | 75,5% |
| Birne (ohne Kerne) | 17,1% | 72,5% |
| Aprikose (ohne Stein) | 13,1% | 64,9% |
| Kirsche süß (ohne Stein) | 18,1% | 73,5% |
| Pfirsich (ohne Stein) | 12,8% | 69,5% |
| Brombeere | 13,8% | 44,9% |
| Erdbeere | 9,9% | 55,6% |
| Kiwi (ohne Schale) | 15,0% | 60,7% |

Der Obst- und/oder Gemüseanteil auf Tresterbasis im Teigprodukt weist vorzugsweise einen resultierenden Kohlenhydratanteil in der Trockenmasse von weniger als 50 %, mehr bevorzugt weniger als 40 %, weiter bevorzugt weniger als 30 % oder 25 % und noch weiter bevorzugt weniger als 20% auf. Trotz des erfindungsgemäßen relativ hohen Obst- und/oder Gemüseanteils kann somit ein Teigprodukt mit relativ geringem absolutem Zielkohlenhydratanteil bereitgestellt werden.

Der verwendete Trester weist vorzugsweise eine Trockenmasse von 10 bis 30%, weiterhin bevorzugt von 15 bis 30%, mehr bevorzugt von 20 bis 30%, und noch mehr bevorzugt von 22 bis 30% auf. In einer besonders bevorzugten Ausführungsform weist der Trester eine Trockenmasse von 22 bis 25% auf. Der verwendete Trester ist vorzugsweise ein industriell hergestellter bzw. herstellbarer Trester. Durch die gegenüber der Obst- und/oder Gemüserohware erhaltene erhöhte Trockenmasse des Tresters wird die Bereitstellung eines relativ hohen Obst- und/oder Gemüseanteils im Teigprodukt ermöglicht.

Der verwendete Trester weist vorzugsweise eine mittlere Partikelgröße D(50,3) von wenigstens 250µm, weiter bevorzugt von wenigstens 300µm, und noch weiter bevorzugt von wenigstens 400µm auf (gemessen mit Laser-Streulichtspektrometer Retsch Technology Horiba LA-960). In einem besonders bevorzugten Ausführungsbeispiel liegt die mittlere Partikelgröße D(50,3) bei 250µm bist 1000µm, mehr bevorzugt bei 300µm bis 900µm, und weiter bevorzugt bei 400µm bis 700µm.

In einer bevorzugten Ausführungsform ist der jeweils verwendete Trester für das Teigprodukt ein frischer Trester. Der verwendete Trester kann alternativ ein getrockneter Trester sein. Der verwendete Trester kann ebenso ein insbesondere zum Zwecke einer Zwischenlagerung und/oder eines Transports eingefrorener Trester sein.

Der verwendete Trester ist vorzugsweise ein gesäuerter Trester. Der pH-Wert des Tresters liegt vorzugsweise bei 3 bis 6, mehr bevorzugt bei 3,5 bis 5,2, und weiterhin bevorzugt bei 4,2 bis 4,8.

Der Obst- und/oder Gemüseanteil des Teigprodukts kann neben einem oder mehreren Trestern wie oben beschrieben einen oder mehrere weitere Obst- und/oder Gemüsebestandteile aufweisen bzw. enthalten. Der oder die weiteren Obst- und/oder Gemüsebestandteile können zum Beispiel aus der Gruppe der Kohlgewächse, Leguminosen und/oder Blattgemüse sein. Diese können in frischer oder auch vermahlener Form vorliegen.

Der weitere Gemüsebestandteil kann beispielsweise aufweisen: Bohnen, Erbsen, Kichererbsen, Linsen, Sojabohnen, Erdnüsse, Weißkohl, Rotkohl, Blumenkohl, Grünkohl, Rosenkohl, Wirsing, Brokkoli, Kohlrabi, Chinakohl, Feldsalat, Kopfsalat, Mangold, Chicoree, Endivien, Spargel, Spinat, Rucola, Karotten, Pastinaken, Paprika, Tomaten, Zwiebeln, Artischocke, Spargel, Avocado, Kartoffel, Kürbis, Zucchini, Aubergine, Gurke, Rote Beete, Sellerie und/oder Oliven.

Der weitere Obstbestandteil kann beispielsweise aufweisen: Apfel, Birne, Aprikose, Kirsche (sauer/süß), Pfirsich, Pflaume, Brombeere, Erdbeere, Heidelbeere, Himbeere, Johannisbeere, Kiwi, Weintraube, Nektarine, Ananas, Granatapfel, Preiselbeeren, Holunder, Limette, Grapefruit, Mandarine, Banane, Mango, Kumquat, Papaya, Melone, Wassermelone und/oder Feige.

Der Anteil des oder der weiteren Obst- und/oder Gemüsebestandteile in der Trockenmasse des Obst- und/oder Gemüseanteils liegt vorzugsweise bei insgesamt weniger als 50%, mehr bevorzugt bei weniger als 30%, weiterhin bevorzugt bei weniger als 20% und noch mehr bevorzugt bei weniger als 5%.

In einer bevorzugten Ausführungsform weist der Obst- und/oder Gemüseanteil bezogen auf die Trockenmasse des Obst- und/oder Gemüseanteils weniger als 25%, mehr bevorzugt weniger als 15%, noch weiter bevorzugt weniger als 5% und am bevorzugtesten keine insbesondere getrockneten Gemüsefasern auf. Hierunter werden insbesondere Gemüsefasern verstanden, welche insbesondere in getrockneter Form und unabhängig vom bereitgestellten Trester vorliegen bzw. auf dem Markt erhältlich sind.

In einer bevorzugten Ausführungsform stellt der Obst- und/oder Gemüseanteil in der Trockenmasse des Teigprodukts den wesentlichsten Bestandteil, d.h. den höchsten prozentualen Anteil, dar. Der Obst- und/oder Gemüseanteil liegt vorzugsweise bei wenigstens 20 bis 70%, mehr bevorzugt bei wenigstens 30 bis 65%, weiter bevorzugt bei 40 bis 65% und noch mehr bevorzugt bei 50 bis 65% der Trockenmasse des Teigprodukts.

Das Teigprodukt kann bezogen auf die Trockenmasse 1 bis 80 %, weiter bevorzugt 15 bis 70%, und noch weiter bevorzugt 20 bis 60% weitere Bestandteile aus einer oder mehrerer der folgenden Lebensmittelgruppen aufweisen: Pflanzenfasern, Pflanzenproteine, Ölsaaten, Ölpresskuchen, Nüsse, Kerne, Pflanzenöle, insbesondere Olivenöl, Milchprodukte und/oder Hühnerei. In einer besonders bevorzugten Ausführungsform liegt der obenstehende Anteil dieser weiteren Bestandteile in der Trockenmasse des Teigprodukts bei wenigstens 20 bis 40 % und alternativ bei wenigstens 40 bis 55 %.

In einer bevorzugten Ausführungsform weist das Teigprodukt bezogen auf die Trockenmasse 5 bis 30 %, weiter bevorzugt 10 bis 25 %, noch weiter bevorzugt 12 bis 22 % Pflanzenölanteil auf. Besonders bevorzugt umfasst der Pflanzenölanteil Olivenöl oder besteht aus diesem.

In einer bevorzugten Ausführungsform weist das Teigprodukt bezogen auf die Trockenmasse 5 bis 35 %, weiter bevorzugt 9 bis 28 %, noch weiter bevorzugt 12 bis 22 % Pflanzenfaseranteil auf. Besonders bevorzugt umfasst der Pflanzenfaseranteil Haferfasern oder besteht aus diesen.

In einer bevorzugten Ausführungsform weist das Teigprodukt bezogen auf die Trockenmasse 5 bis 30%, weiter bevorzugt 10 bis 25%, noch weiter bevorzugt 12 bis 20 % Bindemittel auf. Bevorzugt umfasst das Bindemittel Johannisbrotkernmehl, Xantan, Flohsamenschalen, Carageen, Guarkernmehl, Alginat, Agar-Agar, Pektin, Traganth, Karaya, Tarakernmehl und/oder Gellan. Besonders bevorzugt umfasst der Bindemittelanteil gemahlene Flohsamenschalen oder besteht aus diesen.

In einer bevorzugten Ausführungsform weist das Teigprodukt bezogen auf die Trockenmasse 0,5 bis 5 %, weiter bevorzugt 1,5 bis 4,5 %, noch weiter bevorzugt 2,5 bis 4 % sonstige Bestandteile auf. Die sonstigen Bestandteile können insbesondere Salz und/oder Säuerungsmittel, insbesondere Zitronensaft, umfassen. Der Salzanteil im Teigprodukt liegt vorzugsweise bei 0,5 bis 4,5%, weiter bevorzugt bei 1,5 bis 4 %, noch weiter bevorzugt bei 2,5 bis 3,5 %.

In einer besonders bevorzugten Ausführungsform weist das Teigprodukt bezogen auf die Trockenmasse 20 bis 70% tresterbasierten Obst- und/oder Gemüseanteil, 5 bis 30 % Pflanzenölanteil, 5 bis 35 % Pflanzenfaseranteil, 5 bis 30% Bindemittel, und 0,5 bis 5% sonstige Bestandteile auf, oder besteht aus den vorgenannten Anteilen. Bezüglich der jeweils weiter bevorzugten Bereiche für die einzelnen Bestandteile wird auf die obenstehende Beschreibung der jeweiligen Anteile verwiesen.

In einer bevorzugten Ausführungsform weist das Teigprodukt mehr als 6 %, bevorzugt mehr als 15 %, mehr bevorzugt mehr als 20 % Ballaststoffe auf. Die enthaltenen Ballaststoffe ermöglichen die Bereitstellung von Füllstoffen im erfindungsgemäßen Teigprodukt. Diese können insbesondere Kohlenhydrate als Füllstoff ersetzen, welche im erfindungsgemäßen Produkt gar nicht oder nur in sehr geringen Anteilen vorliegen.

Der Ballaststoffanteil im Trester liegt vorzugsweise bei mehr als 7 %, weiter bevorzugt bei mehr als 10 %, noch weiter bevorzugt bei mehr als 13 %. Der Anteil der Ballaststoffe in der Trockenmasse des bereitgestellten Tresters liegt vorzugsweise bei mehr als 50 %, weiter bevorzugt bei mehr als 55 %, noch weiter bevorzugt bei mehr als 60 %.

Das erfindungsgemäße Teigprodukt weist vorzugsweise außer dem Obst- und/oder Gemüseanteil einen Proteinanteil von weniger als 15%, vorzugsweise weniger als 10%, weiter bevorzugt weniger als 5 %, weiterhin bevorzugt weniger als 2 %, und noch weiter bevorzugt von weniger als 1% auf.

In einer besonders bevorzugten Ausführungsform ist das Teigprodukt bzw. die Zusammensetzung des Teigprodukts rein pflanzlich. In einer weiteren bevorzugten Ausführungsform ist das Teigprodukt bzw. die Zusammensetzung des Teigprodukts glutenfrei. Insbesondere liegt der Glutengehalt in der Zusammensetzung des Teigprodukts bei weniger als 20ppm (20mg/kg).

In einer bevorzugten Ausführungsform ist das erfindungsgemäße Teigprodukt frei von künstlichen und/oder natürlichen, insbesondere zusätzlichen bzw. zugesetzten, Geschmacks- oder Aromastoffen.

In einer bevorzugten Ausführungsform ist bzw. wird das Teigprodukt bei dessen Herstellung aus einem Teig mit einer Trockenmasse von 15 bis 50 %, mehr bevorzugt 20 bis 35 %, weiterhin bevorzugt von 20 bis 30 % und noch weiter bevorzugt 20 bis 27 % ausgeformt.

In einer bevorzugten Ausführungsform wird das Teigprodukt vorzugsweise durch thermische Behandlung des Teigs insbesondere nach einem Ausformen des Teigs erhalten. Die thermische Behandlung ist vorzugsweise ein Backschritt oder umfasst diesen. Das Teigprodukt ist demnach vorzugsweise ein gebackenes Teigprodukt. Der Teig wird dabei vorzugsweise bei mehr als 70 °C, mehr bevorzugt bei mehr als 121°C, und weiterhin bevorzugt bei mehr als 180 °C thermisch behandelt. Dies kann beispielsweise mittels eines Netzbandofens oder Gastroofens erfolgen. Ergänzend oder alternativ kann die thermische Behandlung auch ein Dörren des Teigs oder des Teigprodukts bei vorzugsweise 30 bis 40°C umfassen.

Die Trockenmasse im erfindungsgemäßen Teigprodukt bzw. die Ziel-Trockenmasse nach der thermischen Behandlung des Teigs liegt vorzugsweise bei 30 bis 65%, mehr bevorzugt bei 35 bis 55%, weiter bevorzugt bei 35 bis 50%, noch weiter bevorzugt bei 35 bis 45%.

Das erfindungsgemäße Teigprodukt kann in vielfältiger Form bereitgestellt werden. Insbesondere kann das Teigprodukt in der Form einer Tortilla, eines Pizzabodens, eines Wraps, eines Toastbrots, eines Brötchens, von Nudeln etc. vorliegen.

Das erfindungsgemäße Teigprodukt liegt vorzugsweise als in der Endverpackung pasteurisiert vor. Insbesondere kann nach einer thermischen Behandlung des vorzugsweise zuvor ausgeformten Teigs und einem anschließenden Verpackungsschritt eine Pasteurisierung des Produkts in der Endverpackung durchgeführt werden.

In einem weiteren Aspekt betrifft die Erfindung ein getrocknetes Teigprodukt, bei dem das Teigprodukt wie oben beschrieben auf einen Wassergehalt von weniger als 50 %, bevorzugt weniger als 75 %, und mehr bevorzugt von weniger als 90 % getrocknet oder gedörrt wird. Das getrocknete Teigprodukt kann als verzehrfertiges und vorzugsweise endverpacktes Lebensmittel bereitgestellt sein. Das getrocknete Teigprodukt kann insbesondere ein Nudel-Produkt sein. Das getrocknete Teigprodukt kann bei der Zubereitung vom Verbraucher zum Bereitstellen eines verzehrfertigen Lebensmittelprodukts rehydriert werden. Bezüglich der weiteren Merkmale des getrockneten Teigprodukts sei auf die Offenbarung zum erfindungsgemäßen Teigprodukt verwiesen.

In einem weiteren Aspekt betrifft die Erfindung ein Verfahren zur Herstellung eines bevorzugt endverpackten Teigprodukts auf Tresterbasis, aufweisend die Schritte:
- Bereitstellen eines vorzugsweise industriell verarbeiteten Obst- und/oder Gemüsetresters vorzugsweise mit einer Trockenmasse von 10 bis 30%, weiter bevorzugt von 15 bis 30%, mehr bevorzugt von 20 bis 30%, noch mehr bevorzugt von 22 bis 30%,
- Vermengen des Obst- und/oder Gemüsetresters mit weiteren Zutaten zu einem Teig derart, dass der Teig einen Obst- und/oder Gemüseanteil auf Tresterbasis von wenigstens 20 %, bevorzugt wenigstens 30 %, weiterhin bevorzugt wenigstens 40 %, und noch mehr bevorzugt wenigstens 50 % in der Trockenmasse aufweist,
- Ausformen und thermische Behandlung des Teigs mit einer Temperatur von vorzugsweise wenigstens 70°C,
wobei das resultierende Teigprodukt einen Kohlenhydratanteil (abs.) von weniger als 20 %, bevorzugt weniger als 10% und mehr bevorzugt weniger als 5 % aufweist.

Das Bereitstellen des oder der Trester aus Obst- und/oder Gemüserohware umfasst vorzugsweise den Schritt der vorzugsweise industriellen Zubereitung bzw. Gewinnung des Tresters bzw. ein entsprechendes vorzugsweise industrielles Zubereitungsverfahren. Dieser bzw. dieses basiert auf einer an sich bekannten Zubereitung eines Tresters, weist aber wenigstens einen zusätzlichen Kontroll- und/oder Überwachungsschritt zur Weiterverarbeitung in Lebensmittel auf, welche für den menschlichen Verzehr geeignet sind.

In einer bevorzugten Ausführungsform umfasst der Zubereitungsschritt bzw. das Zubereitungsverfahren die folgenden Unterschritte:
- Reinigung der Obst- und/oder Gemüserohware,
- Schälen, vorzugsweise Dampfschälen,
- visuelle Kontrolle und/oder Selektion geeigneter Obst- und/oder Gemüsestücke,
- mechanische Zerkleinerung und anschließende Erhitzung,
- Auspressen bzw. Extraktion unter Bildung eines Tresters.

Die Reinigung umfasst zunächst ein Waschen der der Obst- und/oder Gemüserohware vorzugsweise mit einer Trommel(sprüh)waschmaschine. Die Reinigung umfasst vorzugsweise weiterhin ein Entsteinen und/oder Enterden. Dies kann beispielsweise mit einem Steinabscheider der Trommelwaschmaschine erfolgen. Alternativ oder zusätzlich kann ein Flotationsentsteiner insbesondere zur Entfernung von Sand und kleineren Steinen eingesetzt werden. Alternativ oder zusätzlich kann ein Schnecken- oder Zyklon-Entsteiner insbesondere zur Entfernung von größeren Steinen eingesetzt werden.

Das Schälen, vorzugsweise ein Dampfschälen, erfolgt vorzugsweise mittels eines Druckbehälters, in welchem das Obst- und/oder Gemüsegut für eine definierte Zeit einem vordefinierten Druck ausgesetzt wird.

Die visuelle Kontrolle und/oder Selektion geeigneter Obst- und/oder Gemüsestücke umfasst vorzugsweise den Transport der gewaschenen und geschälten Obst- und/oder Gemüseware auf einem Transport- bzw. Inspektionsband vorzugsweise mit zugehöriger Sortierungseinrichtung. Hierbei erfolgt eine Selektion bzw. Sortierung der Obst- und/oder Gemüseware in geeignete und ungeeignete Ware. Insbesondere kann hierbei beispielsweise rissige und/oder faule Gemüseware aussortiert werden. Die visuelle Kontrolle und/oder Selektion kann entweder manuell oder automatisch, beispielsweise basierend auf entsprechender Bilderkennung, erfolgen. Die Bilderkennung kann hierbei basierend auf in einer Datenbank hinterlegten Vergleichsinformationen- bzw. -daten erfolgen und/oder die Analyse mittels eines künstlich neuronalen Netzwerks umfassen.

Die mechanische Zerkleinerung erfolgt vorzugsweise mit einer Hammermühle bzw. Schlagmühle. Bei, vor oder nach der der mechanischen Zerkleinerung kann optional Säuerungsmittel, beispielsweise Zitronensäure zugegeben werden.

Die bei der Zerkleinerung erhaltene Maische wird vorzugsweise anschließend pasteurisiert.

Anschließend erfolgt ein Auspressen bzw. eine Extraktion unter Bildung eines Tresters und Gewinnung von Saft, Extrakten und/oder Konzentrat.

Dies kann beispielsweise mittels eines an sich bekannten Dekanters erfolgen. Mit diesem sind relative hohe Trockenmassen des Tresters erzielbar, insbesondere Trockenmassen von wenigstens 15%, mehr bevorzugt von wenigstens 20%. Ebenfalls möglich ist der Einsatz einer an sich bekannten Bandpresse, in welcher die Maische mittels eines Pressbands durch im Durchmesser kleiner werdende Presswalzen geführt und ausgepresst wird.

Der gewonnene bzw. bereitgestellte Trester kann wenigstens stichprobenartig einer Laborkontrolle zur Überprüfung der Eignung für den Einsatz in Lebensmittel für den menschlichen Verzehr unterzogen werden.

Der gewonnene Trester aus der Obst- und/oder Gemüserohware kann frisch weiterverarbeitet oder zu Lagerungs- und/oder Transportzwecken eingefroren werden. Die Bereitstellung des Tresters gemäß der Erfindung erfolgt vorzugsweise ohne weitere Raffination, d.h. insbesondere ohne weitere Reinigung, Veredlung, Trennung oder Konzentration nach den oben beschriebenen Verfahrensschritten.

Bei der Tresterherstellung bzw. Zubereitung erfolgt wie bereits oben beschrieben eine Anreicherung der Trockenmasse und gleichzeitig eine Abreicherung von Kohlenhydraten in der Trockenmasse. Hierdurch kann mittels eines oder mehrerer Trester in substantieller Weise ein Obst- und/oder Gemüseanteil in dem erfindungsgemäßen Teigprodukt realisiert werden und gleichzeitig der absolute Kohlenhydratanteil relativ gering gehalten werden.

Das erfindungsgemäße Verfahren kann zudem die weiteren Schritte aufweisen:
- Vorzerkleinern eines insbesondere gefrorenen Tresters, und
- Feinst-Zerkleinerung des Tresters..

Die Vermengung des Obst- und/oder Gemüsetresters und die Verarbeitung zu einem Teig erfolgt mittels an sich bekannter Vorrichtungen. Anschließend erfährt der Teig eine geeignete Ruhezeit.

Beim vorzugsweise anschließenden Ausformen wird der Teig in die gewünschte Produktform gebracht, beispielsweise in Streifen-, Würfel, oder Scheibenform. Vorzugsweise erfolgt hierbei ein Extrudieren eines Teigbands mit einer vordefinierten Stärke auf ein Transportband mittels einer Schlitzdüse.

Das Ausformen kann den Schritt eines manuellen oder automatischen Ausstechens des Teigs in eine gewünschte Produktform aufweisen. Dies kann beispielsweise auf einem nach der Schlitzdüse angeordneten Transportband erfolgen. Für ein Teigprodukt der Form eines Wraps, einer Tortilla oder eines Pizzabodens kann beispielsweise ein scheibenförmiges Teigstück mit einem vordefinierten Durchmesser, beispielsweise 200 bis 280 mm, ausgestochen werden.

Die thermische Behandlung des Teigs erfolgt vorzugsweise in einem Ofen, beispielsweise einem Netzbandofen oder Gastroofen, bei einer Temperatur von vorzugsweise 70°C bis 250°C, mehr bevorzugt von 121°C bis 230°C und weiter bevorzugt von 180°C bis 230°C. Die thermische Behandlung erfolgt vorzugsweise für einen Zeitraum von 1 bis 10 min, mehr bevorzugt von 1,5 bis 3,5 min.

Mit dem erfindungsgemäßen Verfahren kann ein Teigprodukt wie oben beschrieben bereitgestellt werden. Bei dem Teigprodukt kann es sich insbesondere um eine Tortilla, einen Wrap, einen Pizzaboden, ein Brötchen und/oder um Nudeln handeln.

Zur Vermeidung von Wiederholungen sollen die oben im Zusammenhang mit dem erfindungsgemäßen Produkt offenbarten Merkmale auch als für das erfindungsgemäße Verfahren offenbart gelten und beanspruchbar sein. Ebenso sollen die im Zusammenhang mit dem erfindungsgemäßen Verfahren offenbarten Merkmale auch als für das erfindungsgemäße Produkt offenbart gelten und beanspruchbar sein.

### Beispiele

Im Folgenden werden mehrere Beispiele als bevorzugte Ausführungsformen für das erfindungsgemäße Teigprodukt näher beschrieben.

### Beispiel 1 - Tortilla auf Basis eines Karotten-Tresters

Für die folgende Teigzusammensetzung wird ein frischer Karotten-Trester als Gemüsebestandteil des Teigs und späteren Teigprodukts bereitgestellt. Dieser weist eine Trockenmasse (TM) von 15 % und einen Kohlenhydratanteil (KH) absolut (abs.) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0%, KH 0%) und Salz (TM 100%, KH 0%). Die Zusammensetzung des Teigs ist auf 1000g kalkuliert.

**Tabelle 3 - Rezeptur Beispiel 1**

| Zutat | Menge [g] | [%] | TM [g] | TM Gemüse [g] | KH [g] |
|---|---|---|---|---|---|
| Karotten-Trester | 685,6 | 68,56 | 102,84 | 102,84 | 20,57 |
| Olivenöl | 43,4 | 4,43 | 43,4 | 0 | 0 |
| Haferfaser | 41,3 | 4,13 | 39,23 | 0 | 4,13 |
| Flohsamenschalenmehl | 39,4 | 3,94 | 37,43 | 0 | 0 |
| Zitronensaftkonzentrat | 2 | 0,2 | 0,5 | 0 | 0,43 |
| Wasser | 181,6 | 18,16 | 0 | 0 | 0 |
| Salz | 6,6 | 0,66 | 6,6 | 0 | 0 |
| | | | | | |
| | | | 230 | 102,84 | 25,13 |
| | | | **23 %** | **45%** | **2,5 %** |
| | | | **TM Teig** | **Gem/TM** | **KH (abs)** |

Der frische Trester wird mit den anderen Zutaten gemischt und zu einem Teig verarbeitet. Dieser weist eine Trockenmasse von 23% auf, einen Gemüseanteil von 45% in der Trockenmasse und einen absoluten Kohlenhydratanteil von 2,5%.

Der Teig wird mittels einer entsprechend geformten Schlitzdüse mit einer Stärke von 2 mm auf ein Transportband extrudiert. Hierauf erfolgt ein Ausstechen des Teigs in einer Scheibenform mit einem Durchmesser von 260 mm. Anschließend wird der Teig in einem Ofen (Gastroofen Rational) für 7 min bei 220°C gebacken. Das resultierende Teigprodukt weist eine Trockenmasse von 40-45% und einen Kohlenhydratanteil von 5% auf. Insbesondere erfolgt bei der thermischen Behandlung eine Gewichtsabnahme um den Faktor von 1,9 aufgrund des Wasserentzugs. Der Gemüseanteil in der Trockenmasse von 45% bleibt unverändert. Der Ballaststoffgehalt im Teigprodukt beläuft sich auf 21,9%

Das resultierende Teigprodukt in der Form einer Tortilla ist rein pflanzenbasiert bzw. pflanzlich.

### Beispiel 2 - Pizzaboden auf Basis eines Rote-Beete-Tresters

Für die folgende Teigzusammensetzung wird ein Rote-Beete-Trester als Gemüsebestandteil des Teigs und späteren Teigprodukts bereitgestellt.

Dieser weist eine Trockenmasse von 23% und einen Kohlenhydratanteil (KH) (absolut) von 5 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%) und Salz (TM 100%, KH 0%). Die Zusammensetzung des Teigs ist auf 1000g kalkuliert.

**Tabelle 4 - Rezeptur Beispiel 2**

| Zutat | Menge [g] | [%] | TM [g] | TM Gemüse [g] | KH [g] |
|---|---|---|---|---|---|
| Rote-Beete-Trester | 499 | 49,9 | 112,28 | 112,28 | 24,95 |
| Olivenöl | 31,6 | 3,16 | 31,6 | 0 | 0 |
| Haferfaser | 30,1 | 3,01 | 28,6 | 0 | 3,01 |
| Flohsamenschalenmehl | 28,7 | 2,87 | 27,27 | 0 | 0 |
| Zitronensaftkonzentrat | 2 | 0,2 | 0,5 | 0 | 0,43 |
| Wasser | 398,6 | 39,86 | 0 | 0 | 0 |
| Salz | 8 | 0,8 | 8 | 0 | 0 |
| | | | | | |
| | | | 208,25 | 112,28 | 28,39 |
| | | | **21 %** | **54 %** | **2,8 %** |
| | | | **TM Teig** | **Gem/TM** | **KH (abs)** |

Der Trester wird gefroren angeliefert, zunächst vorzerkleinert und anschließend feinst zerkleinert. Der Trester wird dann mit den anderen Zutaten vermengt und zu einem Teig verarbeitet. Dieser weist eine Trockenmasse von 21% auf, einen Gemüseanteil von 54% in der Trockenmasse und einen absoluten Kohlenhydratanteil von 2,8%.

Der Teig wird mittels einer entsprechend geformten Schlitzdüse mit einer Stärke von 4,5 mm auf ein Transportband extrudiert. Hierauf erfolgt ein Ausstechen des Teigs in einer Rechteckform mit den Abmaßen von 200mm x 300mm. Anschließend wird der Teig in einem Ofen (Netzbandofen Zanolli) für 3,5 min bei 220°C gebacken. Das resultierende Teigprodukt weist eine Trockenmasse von 35-45 % und einen Kohlenhydratanteil von weniger als 6 % auf. Insbesondere erfolgt bei der thermischen Behandlung eine Gewichtsabnahme um den Faktor von 1,9 aufgrund des Wasserentzugs. Der Gemüseanteil in der Trockenmasse von 54 % bleibt unverändert.

Das resultierende Teigprodukt in der Form eines Pizzabodens ist rein pflanzenbasiert bzw. pflanzlich.

### Beispiel 3 - Pizzaboden auf Basis eines Karotten-Tresters mit Leinsamen

Für die folgende Teigzusammensetzung wird ein Karotten-Trester als Gemüsebestandteil des Teigs und späteren Teigprodukts bereitgestellt. Dieser weist eine Trockenmasse von 15% und einen Kohlenhydratanteil (KH) (absolut) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%), Salz (TM 100%, KH 0%), Goldleinsamenmehl (TM 95%, KH 0%), Kokosmehl (TM 95%, KH 5%) und Chiasamen (TM 94%, KH 5,30%). Die Zusammensetzung des Teigs ist auf 1000g kalkuliert.

**Tabelle 5 - Rezeptur Beispiel 3**

| Zutat | Menge [g] | [%] | TM [g] | TM Gemüse [g] | KH [g] |
|---|---|---|---|---|---|
| Karotten-Trester | 535 | 53,5 | 80,25 | 80,25 | 16,05 |
| Olivenöl | 34 | 3,4 | 34 | 0 | 0 |
| Haferfaser | 32 | 3,2 | 30,4 | 0 | 3,2 |
| Flohsamenschalenmehl | 31 | 3,1 | 29,45 | 0 | 0 |
| Zitronensaftkonzentrat | 2 | 0,2 | 0,5 | 0 | 0,43 |
| Wasser | 272 | 27,2 | 0 | 0 | 0 |
| Salz | 7 | 0,7 | 7 | 0 | 0 |
| Goldleinsamen | 52 | 5,2 | 49,4 | 0 | 0 |
| Kokosmehl | 26 | 2,6 | 24,7 | 0 | 1,3 |
| Chiasamen | 9 | 0,9 | 8,46 | 0 | 0,48 |
| | | | | | |
| | | | 264,16 | 80,25 | 21,46 |
| | | | **26,4 %** | **30,4 %** | **2,1 %** |
| | | | **TM Teig** | **Gem/TM** | **KH (abs)** |

Der Trester wird gefroren angeliefert, zunächst vorzerkleinert und anschließend feinst zerkleinert. Der Trester wird dann mit den anderen Zutaten vermengt und zu einem Teig verarbeitet. Dieser weist eine Trockenmasse von 26,4 % auf, einen Gemüseanteil von 30,4 % in der Trockenmasse und einen absoluten Kohlenhydratanteil von 2,1 %.

Der Teig wird mittels einer entsprechend geformten Schlitzdüse mit einer Stärke von 6 mm auf ein Transportband extrudiert. Hierauf erfolgt ein Ausstechen des Teigs in einer Rechteckform mit den Abmaßen von 200mm x 300mm. Anschließend wird der Teig in einem Ofen (Netzbandofen Zanolli) bei 220°C gebacken, bis eine Trockenmasse von 40-50 % erreicht ist. Das Produkt weist einen Kohlenhydratanteil von weniger als 5 % auf. Insbesondere erfolgt bei der thermischen Behandlung eine Gewichtsabnahme aufgrund des Wasserentzugs. Der Gemüseanteil in der Trockenmasse von 30,4 % bleibt unverändert.

Das resultierende Teigprodukt in der Form eines Pizzabodens ist rein pflanzenbasiert bzw. pflanzlich.

### Beispiel 4 - Pizzaboden auf Basis eines Karotten-Tresters mit Blumenkohl, Käse, Ei

Für die folgende Teigzusammensetzung wird ein Karotten-Trester als Gemüsebestandteil des Teigs und späteren Teigprodukts bereitgestellt. Dieser weist eine Trockenmasse von 15 % und einen Kohlenhydratanteil (KH) (absolut) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%), Salz (TM 100%, KH 0%), Blumenkohl (TM 7%, KH 2%), Käse (Mozzarella) (TM 50%, KH 0%) und Ei (TM 25,60%, KH 0%). Die Zusammensetzung des Teigs ist auf 1000g kalkuliert.

**Tabelle 6 - Rezeptur Beispiel 4**

| Zutat | Menge [g] | [%] | TM [g] | TM Gemüse [g] | KH [g] |
|---|---|---|---|---|---|
| Karotten-Trester | 494 | 49,4 | 74,1 | 74,1 | 14,82 |
| Olivenöl | 31 | 3,1 | 31 | 0 | 0 |
| Haferfaser | 30 | 3,0 | 28,5 | 0 | 3,0 |
| Flohsamenschalenmehl | 28 | 2,8 | 26,6 | 0 | 0 |
| Zitronensaftkonzentrat | 1 | 0,1 | 0,25 | 0 | 0,21 |
| Wasser | 131 | 13,1 | 0 | 0 | 0 |
| Salz | 6 | 0,6 | 6 | 0 | 0 |
| Blumenkohl | 137 | 13,7 | 9,59 | 9,59 | 2,74 |
| Käse (Mozzarella) | 110 | 11,0 | 55 | 0 | 0 |
| Ei | 32 | 3,2 | 8,2 | 0 | 0 |
| | | | | | |
| | | | 239,24 | 83,69 | 20,77 |
| | | | **23,9 %** | **35%** | **2,1 %** |
| | | | **TM Teig** | **Gem/TM** | **KH (abs)** |

Der Trester wird gefroren angeliefert, vorzerkleinert und anschließend feinst zerkleinert. Der Trester wird dann mit den anderen Zutaten vermengt und zu einem Teig verarbeitet. Dieser weist eine Trockenmasse von 23,9 % auf, einen Gemüseanteil von 35 % in der Trockenmasse und einen absoluten Kohlenhydratanteil von 2,1 %.

Der Teig wird mittels einer entsprechend geformten Schlitzdüse mit einer Stärke von 6 mm auf ein Transportband extrudiert. Hierauf erfolgt ein Ausstechen des Teigs in einer Rechteckform mit den Abmaßen von 200mm x 300mm. Anschließend wird der Teig in einem Ofen (Netzbandofen Zanolli) bei 220°C gebacken, bis eine Trockenmasse von 40 bis 50% erreicht ist. Das resultierende Teigprodukt weist einen Kohlenhydratanteil von weniger als 5 % auf. Insbesondere erfolgt bei der thermischen Behandlung eine Gewichtsabnahme aufgrund des Wasserentzugs. Der Gemüseanteil in der Trockenmasse von 35 % bleibt unverändert.

### Beispiel 5 - Pizzaboden auf Basis eines Karotten-Tresters mit Mandelmehl, Käse, Ei

Für die folgende Teigzusammensetzung wird ein Karotten-Trester als Gemüsebestandteil des Teigs und späteren Teigprodukts bereitgestellt. Dieser weist eine Trockenmasse von 15 % und einen Kohlenhydratanteil (KH) (absolut) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%), Salz (TM 100%, KH 0%), Käse (Mozzarella) (TM 50%, KH 0%), Ei (TM 25,60%, KH 0%), Mandelmehl (TM 95%, KH 3,7%) und Frischkäse (TM 35%, KH 3%). Die Zusammensetzung des Teigs ist auf 1000g kalkuliert.

**Tabelle 7 - Rezeptur Beispiel 5**

| Zutat | Menge [g] | [%] | TM [g] | TM Gemüse [g] | KH [g] |
|---|---|---|---|---|---|
| Karotten-Trester | 446 | 44,6 | 66,9 | 66,9 | 13,38 |
| Olivenöl | 44 | 4,4 | 44 | 0 | 0 |
| Haferfaser | 27 | 2,7 | 25,65 | 0 | 2,7 |
| Flohsamenschalenmehl | 26 | 2,6 | 24,7 | 0 | 0 |
| Zitronensaftkonzentrat | 1 | 0,1 | 0,25 | 0 | 0,21 |
| Wasser | 118 | 11,8 | 0 | 0 | 0 |
| Salz | 4 | 0,4 | 4 | 0 | 0 |
| Käse (Mozzarella) | 120 | 12 | 60 | 0 | 0 |
| Ei | 93 | 9,3 | 23,8 | 0 | 0 |
| Mandelmehl | 64 | 6,4 | 60,8 | 0 | 2,37 |
| Frischkäse | 56 | 5,6 | 19,6 | 0 | 1,68 |
| | | | | | |
| | | | 329,7 | 66,9 | 20,34 |
| | | | **33 %** | **20,3 %** | **2%** |
| | | | **TM Teig** | **Gem/TM** | **KH (abs)** |

Der Trester wird gefroren angeliefert, zunächst vorzerkleinert und anschließend feinst zerkleinert. Der Trester wird dann mit den anderen Zutaten gemischt und zu einem Teig verarbeitet. Dieser weist eine Trockenmasse von 33 % auf, einen Gemüseanteil von 20,3 % in der Trockenmasse und einen absoluten Kohlenhydratanteil von 2 %.

Der Teig wird mittels einer entsprechend geformten Schlitzdüse mit einer Stärke von 4 mm auf ein Transportband extrudiert. Hierauf erfolgt ein Ausstechen des Teigs in einer Rechteckform mit den Abmaßen von 200mm x 300mm. Anschließend wird der Teig in einem Ofen (Netzbandofen Zanolli) bei 220°C gebacken, bis eine Trockenmasse von 45-55% erreicht ist. Das resultierende Teigprodukt weist einen Kohlenhydratanteil von weniger als 4 % auf. Insbesondere erfolgt bei der thermischen Behandlung eine Gewichtsabnahme aufgrund des Wasserentzugs. Der Gemüseanteil in der Trockenmasse von 20,3 % bleibt unverändert.

### Beispiel 6 - Toastie auf Basis eines Karotten-Tresters mit Mandelmehl, Kokosmehl und Sojamehl

Für die folgende Teigzusammensetzung wird ein Karotten-Trester als Gemüsebestandteil des Teigs und späteren Teigprodukts bereitgestellt. Dieser weist eine Trockenmasse von 15% und einen Kohlenhydratanteil (KH) (absolut) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%), Salz (TM 100%, KH 0%), Kokosmehl (TM 95%, KH 5%), Mandelmehl (TM 95%, KH 3,7%), Sojamehl (TM 90,90%, KH 3,10%), Johannesbrotkernmehl (TM 11,45%, KH 7,30%), und Backtriebmittel (Natriumhydrigencarbonat, Reinweinstein, TM 95%, KH 0%). Die Zusammensetzung des Teigs ist auf 1000g kalkuliert.

**Tabelle 8 - Rezeptur Beispiel 6**

| Zutat | Menge [g] | [%] | TM [g] | TM Gemüse [g] | KH [g] |
|---|---|---|---|---|---|
| Karotten-Trester | 480 | 48 | 72 | 72 | 14,4 |
| Olivenöl | 38 | 3,8 | 38 | 0 | 0 |
| Haferfaser | 29 | 2,9 | 27,55 | 0 | 2,9 |
| Flohsamenschalenmehl | 28 | 2,8 | 26,6 | 0 | 0 |
| Zitronensaftkonzentrat | 1 | 0,1 | 0,25 | 0 | 0,21 |
| Wasser | 241 | 24,1 | 0 | 0 | 0 |
| Salz | 9 | 0,9 | 9 | 0 | 0 |
| Kokosmehl | 40 | 4,0 | 38 | 0 | 2 |
| Mandelmehl | 82 | 8,2 | 77,9 | 0 | 3 |
| Sojamehl | 32 | 3,2 | 29,09 | 29,09 | 0,99 |
| Johannesbrotkernmehl | 5 | 0,5 | 0,57 | 0 | 0,36 |
| Backtriebmittel | 15 | 1,5 | 14,25 | | 0 |
| | | | | | |
| | | | 333,21 | 101,09 | 23,9 |
| | | | **33,3 %** | **30,3 %** | **2,4 %** |
| | | | **TM Teig** | **Gem/TM** | **KH (abs)** |

Der Trester wird gefroren angeliefert, zunächst vorzerkleinert und anschließend feinst zerkleinert. Der Trester wird dann mit den anderen Zutaten vermengt und zu einem Teig verarbeitet. Dieser weist eine Trockenmasse von 33,3 % auf, einen Gemüseanteil von 30,3 % in der Trockenmasse und einen absoluten Kohlenhydratanteil von 2,4 %.

Der Teig wird mittels einer entsprechend geformten Schlitzdüse mit einer Stärke von 6 mm auf ein Transportband extrudiert. Hierauf erfolgt ein Ausstechen des Teigs in einer Rechteckform mit den Abmaßen von 100mm x 100mm. Anschließend wird der Teig in einem Ofen (Netzbandofen Zanolli) bei 220°C gebacken, bis eine Trockenmasse von 45-55% erreicht ist. Das resultierende Teigprodukt weist einen Kohlenhydratanteil von etwa 4 % auf. Insbesondere erfolgt bei der thermischen Behandlung eine Gewichtsabnahme aufgrund des Wasserentzugs. Der Gemüseanteil in der Trockenmasse von 30,3 % bleibt unverändert.

Das resultierende Teigprodukt in der Form eines Toasties ist rein pflanzenbasiert bzw. pflanzlich.

### Beispiel 7 - Wrap auf Basis eines Karotten-Tresters mit Mandelmehl, Kokosmehl und Sojamehl

Für die folgende Teigzusammensetzung wird ein Karotten-Trester als Gemüsebestandteil des Teigs und späteren Teigprodukts bereitgestellt. Dieser weist eine Trockenmasse von 15% und einen Kohlenhydratanteil (KH) (absolut) von 3 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%), Salz (TM 100%, KH 0%), Kokosmehl (TM 95%, KH 5%), Mandelmehl (TM 95%, KH 3,7%), Sojamehl (TM 90,90%, KH 3,10%) und Johannesbrotkernmehl (TM 11,45%, KH 7,30%). Die Zusammensetzung des Teigs ist auf 1000g kalkuliert.

**Tabelle 9 - Rezeptur Beispiel 7**

| Zutat | Menge [g] | [%] | TM [g] | TM Gemüse [g] | KH [g] |
|---|---|---|---|---|---|
| Karotten-Trester | 343 | 34,3 | 51,4 | 51,4 | 10,3 |
| Olivenöl | 34 | 3,4 | 33,9 | 0 | 0 |
| Haferfaser | 21 | 2,1 | 19,6 | 0 | 2,1 |
| Flohsamenschalenmehl | 20 | 2,0 | 18,7 | 0 | 0 |
| Zitronensaftkonzentrat | 1 | 0,1 | 0,25 | 0 | 0,21 |
| Wasser | 281 | 28,1 | 0 | 0 | 0 |
| Salz | 11 | 1,1 | 11 | 0 | 0 |
| Kokosmehl | 76 | 7,6 | 72,2 | 0 | 3,8 |
| Mandelmehl | 152 | 15,2 | 144,4 | 0 | 5,6 |
| Sojamehl | 53 | 5,3 | 48,4 | 48,4 | 1,6 |
| Johannesbrotkernmehl | 9 | 0,9 | 1,0 | 0 | 0,7 |
| | | | | | |
| | | | 400,85 | 99,8 | 24,3 |
| | | | **40,1 %** | **24,9 %** | **2,4 %** |
| | | | **TM Teig** | **Gem/TM** | **KH (abs)** |

Der frische Trester wird mit den anderen Zutaten gemischt und zu einem Teig verarbeitet. Dieser weist eine Trockenmasse von 40,1 % auf, einen Gemüseanteil von 24,9 % in der Trockenmasse und einen absoluten Kohlenhydratanteil von 2,4 %.

Der Teig wird mittels einer entsprechend geformten Schlitzdüse mit einer Stärke von 3 mm auf ein Transportband extrudiert. Hierauf erfolgt ein Ausstechen des Teigs in einer Scheibenform mit einem Durchmesser von 180 mm. Anschließend wird der Teig in einem Ofen (Gastroofen Rational) bei 220°C gebacken, bis eine Trockenmasse von 55-65% erreicht ist. Das resultierende Teigprodukt weist einen Kohlenhydratanteil von unter 5% auf. Insbesondere erfolgt bei der thermischen Behandlung eine Gewichtsabnahme um den Faktor von 1,3 aufgrund des Wasserentzugs. Der Gemüseanteil in der Trockenmasse von 24,9 % bleibt unverändert.

Das resultierende Teigprodukt in der Form eines Wraps ist rein pflanzenbasiert bzw. pflanzlich.

### Beispiel 8 - Pfannkuchen auf Basis eines Apfel-Tresters

Für die folgende Teigzusammensetzung wird ein Apfel-Trester als Obstbestandteil des Teigs und späteren Teigprodukts bereitgestellt. Dieser weist eine Trockenmasse von 24% und einen Kohlenhydratanteil (KH) (absolut) von 8 % auf. Die weiteren Zutaten sind Olivenöl (TM 100%, KH 0%), Haferfaser (TM 95%, KH 10%), Flohsamenschalenmehl (TM 95%, KH 0%), Zitronensaftkonzentrat (TM 25%, KH 21,40%), Wasser (TM 0% , KH 0%) und Salz (TM 100%, KH 0%). Die Zusammensetzung des Teigs ist auf 1000g kalkuliert.

**Tabelle 10 - Rezeptur Beispiel 8**

| Zutat | Menge [g] | [%] | TM [g] | TM Obst [g] | KH [g] |
|---|---|---|---|---|---|
| Apfel-Trester | 499 | 49,9 | 119,76 | 119,76 | 39,92 |
| Olivenöl | 31,6 | 3,16 | 31,6 | 0 | 0 |
| Haferfaser | 30,1 | 3,01 | 28,59 | 0 | 3,01 |
| Flohsamenschalenmehl | 28,7 | 2,87 | 27,26 | 0 | 0 |
| Zitronensaftkonzentrat | 2 | 0,2 | 0,5 | 0 | 0,42 |
| Wasser | 398,6 | 39,86 | 0 | 0 | 0 |
| Salz | 8 | 0,8 | 8 | 0 | 0 |
| | | | | | |
| | | | 215,71 | 119,76 | 43,35 |
| | | | **21,6 %** | **55,5 %** | **4,3 %** |
| | | | **TM Teig** | **Obst/TM** | **KH (abs)** |

Der frische Trester wird mit den anderen Zutaten gemischt und zu einem Teig verarbeitet. Dieser weist eine Trockenmasse von 21,6 % auf, einen Obstanteil von 55,5 % in der Trockenmasse und einen absoluten Kohlenhydratanteil von 4,3 %. Der Teig wird mittels einer entsprechend geformten Schlitzdüse mit einer Stärke von 3 mm auf ein Transportband extrudiert. Hierauf erfolgt ein Ausstechen des Teigs in einer Scheibenform mit einem Durchmesser von 260 mm. Anschließend wird der Teig in einem Ofen (Gastroofen Rational) bei 220°C gebacken, bis eine Trockenmasse von 40-45% erreicht ist. Das resultierende Teigprodukt weist einen Kohlenhydratanteil von unter 10% auf. Insbesondere erfolgt bei der thermischen Behandlung eine Gewichtsabnahme um den Faktor von 1,9 aufgrund des Wasserentzugs. Der Obstanteil in der Trockenmasse von 55,5 % bleibt unverändert.

Das resultierende Teigprodukt in der Form eines Pfannkuchens ist rein pflanzenbasiert bzw. pflanzlich.

## Patentansprüche

1. Teigprodukt auf Tresterbasis, bevorzugt hergestellt nach einem Verfahren nach Anspruch 22, aufweisend
einen Obst- und/oder Gemüseanteil auf Basis eines oder mehrerer Trester und von wenigstens 20 %, bevorzugt von wenigstens 30 % und mehr bevorzugt von wenigstens 40 % in der Trockenmasse des Teigprodukts,
wobei das Teigprodukt einen Kohlenhydratanteil (abs.) von weniger als 20 %, bevorzugt weniger als 10 % und mehr bevorzugt weniger als 5 % aufweist.

2. Teigprodukt nach Anspruch 1, wobei der Trester aus Obst- und Gemüserohwaren stammt, welche im frischen Zustand ein Kohlenhydratanteil in der Trockenmasse von mehr als 40 % aufweisen und/oder wobei der Trester einen Kohlenhydratanteil in der Trockenmasse von weniger als 40 %, bevorzugt weniger als 30 % aufweist.

3. Teigprodukt nach Anspruch 1 oder 2, wobei der Obst- und/oder Gemüseanteil einen Kohlenhydratanteil in der Trockenmasse von weniger als 50 %, bevorzugt weniger als 40 %, und mehr bevorzugt weniger als 30 % aufweist.

4. Teigprodukt nach einem der Ansprüche 1 bis 3, wobei der Trester ein frischer Trester ist, mit einer Trockenmasse von 10 bis 30 %, bevorzugt 15 bis 30 %, mehr bevorzugt von 20 bis 30 %, besonders bevorzugt von 22 bis 30 %.

5. Teigprodukt nach einem der vorhergehenden Ansprüche, wobei der Trester ein gesäuerter Trester ist, welcher einen pH-Wert von 3 bis 6, bevorzugt von 3,5 bis 5,2 mehr bevorzugt von 4,2 bis 4,8 aufweist.

6. Teigprodukt nach einem der Ansprüche 1 bis 3, wobei der Trester ein getrockneter Trester ist.

7. Teigprodukt nach einem der vorhergehenden Ansprüche, wobei das für den Trester verwendete Gemüse ausgewählt ist aus: Karotte, Pastinake, Rote Bete, Rotkohl, Weißkohl, Gurken, Tomate, Kürbis, Zucchini, Paprika, Zichorien, insbesondere Chicoree, Zuckerrübe, Gartenbohne, Erbse, Kohlrabi und/oder Zwiebeln.

8. Teigprodukt nach einem der vorhergehenden Ansprüche, wobei das für den Trester verwendete Obst ausgewählt ist aus: Apfel, Birne, Aprikose, Kirsche sauer, Kirsche süß, Pfirsich, Pflaume, Brombeere, Erdbeere, Heidelbeere, Himbeere, Johannisbeere, Kiwi, und/oder Weintraube.

9. Teigprodukt nach einem der vorhergehenden Ansprüche, wobei das Teigprodukt bezogen auf die Trockenmasse 1 bis 80 %, bevorzugt 15 bis 70 %, mehr bevorzugt 20 bis 60 % weitere Bestandteile aus einer oder mehrerer der folgenden Lebensmittelgruppen enthält: Pflanzenfasern, Pflanzenproteine, Ölsaaten, Ölpresskuchen, Nüsse, Kerne, Pflanzenöle, Milchprodukte und/oder Hühnerei.

10. Teigprodukt nach einem der vorhergehenden Ansprüche, wobei das Teigprodukt bezogen auf die Trockenmasse 5 bis 30 %, weiter bevorzugt 10 bis 25 %, noch weiter bevorzugt 12 bis 22 % Pflanzenölanteil, insbesondere Olivenöl aufweist.

11. Teigprodukt nach einem der vorhergehenden Ansprüche, wobei das Teigprodukt bezogen auf die Trockenmasse 5 bis 35 %, weiter bevorzugt 9 bis 28 %, noch weiter bevorzugt 12 bis 22 % Pflanzenfaseranteil, insbesondere Haferfaser aufweist.

12. Teigprodukt nach einem der vorhergehenden Ansprüche, wobei das Teigprodukt bezogen auf die Trockenmasse 5 bis 30 %, weiter bevorzugt 10 bis 25 %, noch weiter bevorzugt 12 bis 20 % Bindemittelanteil aufweist.

13. Teigprodukt nach Anspruch 12, wobei der Bindemittelanteil ausgewählt ist aus: Johannisbrotkernmehl, Xantan, insbesondere gemahlenen Flohsamenschalen, Carageen, Guarkernmehl, Alginat, Agar-Agar, Pektin, Traganth, Karaya, Tarakernmehl und/oder Gellan.

14. Teigprodukt nach einem der vorhergehenden Ansprüche, wobei das Teigprodukt mehr als 6 %, bevorzugt mehr als 15 %, mehr bevorzugt mehr als 20 % Ballaststoffe aufweist.

15. Teigprodukt nach einem der vorhergehenden Ansprüche, bei dem die Zusammensetzung des Teigprodukts rein pflanzlich ist.

16. Teigprodukt nach einem der vorhergehenden Ansprüche, bei dem die Zusammensetzung des Teigprodukts glutenfrei ist.

17. Teigprodukt nach einem der vorhergehenden Ansprüche, wobei das Teigprodukt außer dem Obst- und/oder Gemüseanteil einen Proteinanteil von weniger als 15 %, bevorzugt weniger als 10 %, mehr bevorzugt weniger als 5 % aufweist.

18. Teigprodukt nach einem der vorhergehenden Ansprüche, wobei das Teigprodukt eine Trockenmasse von 30 bis 65%, mehr bevorzugt von 35 bis 55%, weiter bevorzugt von 35 bis 50%, besonders bevorzugt von 35 bis 45% aufweist.

19. Teigprodukt nach einem der vorhergehenden Ansprüche, wobei das Teigprodukt durch thermische Behandlung eines Teigs nach einem Ausformen bei Temperaturen mehr als 70 °C, bevorzugt mehr als 121°C, und mehr bevorzugt von mehr als 180 °C, vorzugsweise in einem Backschritt, erhalten wird.

20. Teigprodukt nach einem der vorhergehenden Ansprüche, wobei das Teigprodukt als in der Endverpackung pasteurisiert vorliegt.

21. Getrocknetes Teigprodukt, bei dem das Teigprodukt nach einem der vorhergehenden Ansprüche auf einen Wassergehalt von weniger als 50%, bevorzugt weniger als 75%, und mehr bevorzugt von weniger als 90 % getrocknet oder gedörrt wird.

22. Verfahren zur Herstellung eines bevorzugt endverpackten Teigprodukts auf Tresterbasis, aufweisend die Schritte:
- Bereitstellen eines vorzugsweise industriell verarbeiteten Obst- und/oder Gemüsetresters vorzugsweise mit einer Trockenmasse von 10 bis 30 %, weiter bevorzugt von 15 bis 30 %, mehr bevorzugt von 20 bis 30 %,
- Vermengen des Obst- und/oder Gemüsetresters mit weiteren Zutaten zu einem Teig derart, dass der Teig einen Obst- und/oder Gemüseanteil auf Tresterbasis von wenigstens 20 %, bevorzugt wenigstens 30 %, mehr bevorzugt wenigstens 40 % in der Trockenmasse aufweist,
- Ausformen des Teigs, und
- thermische Behandlung des Teigs mit einer Temperatur von vorzugsweise wenigstens 70°C,
wobei das resultierende Teigprodukt einen Kohlenhydratanteil (abs.) von weniger als 20 %, bevorzugt weniger als 10 % und mehr bevorzugt weniger als 5 % aufweist.
